# FASCICULE DE BREVET EUROPEEN

(11) **EP 2 794 820 B1**
(45) Date de publication et mention de la délivrance du brevet: **09.08.2017**
(21) Numéro de dépôt: 12808365.6
(22) Date de dépôt: 17.12.2012
(51) Int. Cl.: C10L 1/14, C10L 10/00, C10L 10/04, C10L 1/183, C10L 1/232, C10L 1/24, C10L 1/185, C10L 1/238, C10L 1/2383, C10L 1/2387

(54) **UTILISATION DE COMPOSITIONS D'ADDITIFS AMELIORANT LA RESISTANCE AU LACQUERING DE CARBURANTS DE TYPE DIESEL OU BIODIESEL ET CARBURANTS PRESENTANT UNE RESISTANCE AU LACQUERING AMELIOREE**
VERWENDUNG VON ZUSATZMITTELZUSAMMENSETZUNGEN ZUR VERBESSERUNG DER LACKIERUNGSBESTÄNDIGKEIT VON DIESEL- ODER BIODIESELTREIBSTOFFEN UND KRAFTSTOFFE MIT VERBESSERTEN LACKIERUNGSBESTÄNDIGKEIT
USE OF ADDITIVE COMPOSITIONS THAT IMPROVE THE LACQUERING RESISTANCE OF DIESEL OR BIODIESEL FUELS AND FUELS WITH IMPROVED LACQUERING RESISTANCE

(30) Priorité: 21.12.2011 FR 1162225
(43) Date de publication de la demande: 29.10.2014
(73) Titulaire: Total Marketing Services, 92800 Puteaux (FR)
(72) Inventeur: ARONDEL, Mathieu, F-69003 Lyon (FR); DEQUENNE, Bernard, F-69130 Ecully (FR); RODESCHINI, Hélène, F-69003 Lyon (FR)
(74) Mandataire: Martin-Charbonneau, Virginie
(86) Numéro de dépôt international: PCT/EP2012/075863
(87) Numéro de publication internationale: WO 2013/092533

(56) Documents cités:
- EP-A1- 0 482 253
- EP-A1- 2 147 966
- WO-A1-03/095593
- WO-A1-2008/065015
- WO-A1-2009/040586
- WO-A1-2013/007738
- WO-A2-2009/010441
- US-A1- 2010 293 844
- DATABASE WPI Week 201156 Thomson Scientific, London, GB; AN 2011-G86843 XP002696808, & CN 102 051 239 A (CHINA PETROCHEMICAL CO LTD) 11 mai 2011 (2011-05-11)
- ZIEJEWSKI ET AL: "Reduced Injection Needle Mobility Caused by Lacquer Deposits from Sunflower Oil", SAE TECHNICAL PAPER SERIES; INTERNATIONAL CONGRESS AND EXPOSITION, SOCIETY OF AUTOMOTIVE ENGINEERS, WARRENDALE, PA, US; DETROIT, MICHIGAN, US , no. 880493 1 février 1988 (1988-02-01), pages 1-9, XP008155643, ISSN: 0148-7191, DOI: 10.4271/880493 Extrait de l'Internet: URL:papers.sae.org/880493 [extrait le 2012-08-31] cité dans la demande
- Jörg Ullmann et Al.: "Investigation into the Formation and Prevention of Internal Diesel Injector Deposits", , 1 avril 2008 (2008-04-01), XP055036849, DOI: 10.4271/2008-01-0926 Extrait de l'Internet: URL:http://digitallibrary.sae.org/content/ 2008-01-0926 [extrait le 2012-08-30] cité dans la demande
- CAPROTTI R ET AL: "Deposit Control in Modern Diesel Fuel Injection Systems", SAE INTERNATIONAL JOURNAL OF FUELS AND LUBRICANTS, SAE INC, US , vol. 3, no. 2 25 octobre 2010 (2010-10-25), pages 901-915, XP002679060, ISSN: 1946-3952, DOI: 10.4271/2010-01-2250 Extrait de l'Internet: URL:http://digitallibrary.sae.org/content/ 2010-01-2250 [extrait le 2012-08-30] cité dans la demande
- Scott D. Schwab ET AL: "Internal Injector Deposits in High-Pressure Common Rail Diesel Engines", SAE Technical paper, 25 octobre 2010 (2010-10-25), pages 865-878, XP055029840, U.S.A. DOI: 10.4271/2010-01-2242 Extrait de l'Internet: URL:http://digitallibrary.sae.org/content/ 2010-01-2242 [extrait le 2012-06-13] cité dans la demande

## Description

La présente invention concerne l'utilisation de compositions d'additifs pour carburants de type diesel ou biodiesel (Bx) de qualité supérieure pour améliorer la résistance au lacquering. Les carburants diesel ou biodiesel sont des carburants utilisables pour l'alimentation des moteurs à allumage par compression ou moteurs diesel équipant des véhicules automobiles (voitures particulières, véhicules utilitaires, poids lourds,...).

Les carburants diesel commercialisés doivent respecter des spécifications nationales ou supranationales (par exemple la norme EN 590 pour les carburants diesel dans l'UE). Pour les carburants commerciaux, il n'existe aucune obligation légale concernant l'incorporation d'additifs (composés chimiques incorporés dans les carburants pour en améliorer les propriétés, par exemple additifs améliorant la tenue à froid) ; les compagnies pétrolières, les distributeurs sont libres d'ajouter ou non des additifs à leurs carburants. Du point de vue commercial, dans le domaine de la distribution des carburants, on distingue les carburants « premier prix », pas ou peu additivés, des carburants de qualité supérieure dans lesquels sont incorporés un ou plusieurs additifs pour en améliorer les performances (au-delà des performances réglementaires). Au sens de la présente invention, on entend par carburant de qualité supérieure de type gazole ou biodiesel tout carburant gazole ou biodiesel additivé avec au moins 50 ppm m/m de réducteur(s) de dépôts/dispersant(s).

On constate que les carburants diesel ou biodiesel de qualité supérieure sont parfois la cause de dépôts sur les aiguilles d'injecteur des systèmes d'injection de moteurs diesel, notamment ceux de type Euro 3 à Euro 6.

Ce phénomène de dépôts est également connu sous le terme anglais de lacquering qui sera utilisé dans tout ce qui suit ou sous l'acronyme anglais IDID (internal diesel injector deposits). Au sens de la présente invention, le phénomène de lacquering ne concerne pas les dépôts externes au système d'injection relatifs au cokage (coking en anglais) ou bouchage des buses d'injection (nozzle coking ou fouling) tels que simulés par exemple par l'essai moteur standard CEC F098-08 DW10B, en particulier lorsque le carburant testé est contaminé par du zinc métallique.

Le phénomène de lacquering peut être localisé sur l'extrémité des aiguilles d'injecteurs, à la fois sur la tête et sur le corps des aiguilles du système d'injection du carburant mais aussi dans tout le système de commande de la levé d'aiguilles (clapets) du système d'injection, pour les moteurs de véhicules fonctionnant avec un carburant diesel ou biodiesel, et peut à terme, générer une perte de débit de carburant injecté et donc une perte de puissance du moteur.

On distingue en général 2 types de dépôts de la catégorie lacquering :
1. des dépôts plutôt blanchâtres et pulvérulents ; par analyse, on constate que ces dépôts consistent essentiellement en savons de sodium (carboxylate de sodium, par exemple) et/ou de calcium (dépôts de type 1) ;
2. des dépôts organiques assimilables à des vernis colorés localisés sur le corps de l'aiguille (dépôts de type 2).

Pour ce qui concerne les dépôts de type 1, les sources de sodium dans les carburants de type Bx peuvent être multiples :
- les catalyseurs de transestérification des huiles végétales pour la production des esters de type esters (m)éthyliques d'acides gras tel que le méthanoate de sodium ;
- une autre source possible de sodium peut provenir des inhibiteurs de corrosion utilisés pour le transport de produits pétroliers dans certains pipes, tel que le nitrite de sodium ;
- enfin des pollutions exogènes accidentelles, via l'eau ou l'air par exemple, peuvent contribuer à introduire du sodium dans les carburants (le sodium étant un élément très répandu).

Les sources possibles d'acides dans les carburants de type Bx peuvent être multiples, par exemple :
o les acides résiduels des biocarburants (voir la norme EN14214 qui fixe un taux maximal d'acides autorisé)
o les inhibiteurs de corrosion utilisés pour le transport de produits pétroliers dans certains pipes tels que le DDSA (anhydride dodécénylsuccinique) ou le HDSA (anhydride hexadécénylsuccinique).

Pour ce qui concerne les dépôts organiques de type 2, certaines publications précisent qu'ils peuvent notamment provenir de réactions entre les réducteurs de dépôts/dispersants (par exemple de type PIBSI) et les acides (qui seraient présents entre autres en tant qu'impuretés des esters d'acides gras du biodiesel).

Dans la publication SAE 880493, *Reduced Injection Needle Mobility Caused by Lacquer Deposits from Sunflower Oil,* les auteurs M Ziejewski et HJ Goettler décrivent le phénomène de lacquering et ses conséquences néfastes pour le fonctionnement de moteurs fonctionnant avec des huiles de tournesol comme carburant.

Dans la publication SAE 2008-01-0926, *Investigation into the Formation and Prevention of Internal Diesel Injector Deposits,* les auteurs J Ullmann, M Geduldig, H Stutzenberger (Robert Bosch GmbH) et R Caprotti, G Balfour (Infineum) décrivent aussi les réactions entre les acides et les réducteurs de dépôts/dispersants pour expliquer les dépôts de type 2.

Par ailleurs, dans la publication SAE International, 2010-01-2242, *Internal Injector Deposits in High-Pressure Common Rail Diesel Engines,* les auteurs S. Schwab, J. Bennett, S. Dell, JGalante-Fox, AKulinowski et Keith T. Miller expliquent que les parties internes des injecteurs sont généralement recouvertes par un dépôt légèrement coloré et visible à l'oeil nu. Leurs analyses ont permis de déterminer qu'il s'agit majoritairement de sels de sodium d'acides alkényl-(hexadécényl- ou dodécényl-)-succiniques ; le sodium provenant de desséchants, d'eau caustique utilisée en raffinerie, d'eau de fonds de bacs ou d'eau de mer, et les diacides succiniques étant utilisés comme inhibiteurs de corrosion ou présents dans les paquets multifonctionnels d'additifs. Une fois formés, ces sels sont insolubles dans les carburants diesel basse teneur en soufre, et comme ils existent sous forme de fines particules, passent au travers des filtres gazole et viennent se déposer à l'intérieur des injecteurs. Dans cette publication, le développement d'un essai moteur est décrit et permet de reproduire les dépôts. La publication insiste sur le fait que seuls les diacides génèrent des dépôts, contrairement aux monoacides carboxyliques ou aux esters neutres des acides organiques.

Dans la publication SAE International, 2010-01-2250, *Deposit Control in Modern Diesel Fuel Injection System,* les auteurs, R.Caprotti, N. Bhatti and G. Balfour, étudient aussi le même type de dépôts internes dans les injecteurs et affirment que l'apparition de dépôts n'est pas liée spécifiquement à un type de carburant (B0 ou contenant des EMAG(Bx)) ni à un type de véhicules (véhicules légers ou poids lourds) équipés de motorisations modernes (common rail). Ils montrent la performance d'un nouveau réducteur de dépôts/dispersant, efficace sur tous types de dépôts (coking et lacquering).

Les dépôts dus au phénomène de lacquering sont insolubles dans les carburants diesel à basse teneur en soufre et les carburants biodiesel. Ces dépôts existent sous forme de fines particules et peuvent passer au travers des filtres gazole et se déposer à l'intérieur des injecteurs.

L'accumulation des dépôts de type lacquering tels que décrits ci-dessus peut entraîner les inconvénients suivants :
- un ralentissement de la réponse de l'injecteur de carburant,
- le collage des pièces internes, ce qui peut entraîner une perte de contrôle du temps d'injection ainsi que de la quantité de carburant fournie par injection,
- une perte de maniabilité du véhicule,
- des variations de puissance,
- une augmentation de la consommation de carburant,
- une augmentation des polluants,
- une perturbation de la combustion, puisque la quantité de carburant injectée ne sera pas celle prévue en théorie et le profil de l'injection sera différent,
- un ralenti instable du véhicule,
- une augmentation du bruit produit par le moteur,
- une baisse de la qualité de la combustion sur le long terme,
- une baisse de la qualité de la pulvérisation.

Dans le cas où il y aurait un fort dépôt de type lacquering, le véhicule pourrait avoir de grandes difficultés à démarrer, voire ne plus démarrer du tout, puisque l'aiguille permettant l'injection serait bloquée.

La présente invention permet de surmonter les inconvénients indiqués ci-dessus.

La présente invention propose des compositions d'additifs susceptibles d'améliorer de manière tangible la résistance au lacquering de carburants diesel et biodiesel de qualité supérieure, i-e additivés avec au moins 50 ppm massiques de réducteur(s) de dépôts//dispersant(s).

Le ou les réducteur(s) de dépôts/dispersants utilisés dans les carburants de qualité supérieure sont en général choisis parmi :
∘ les amines substituées telle que la N-polyisobutène amine R1-NH₂, la N-polyisobutènethylènediamine R1-NH-R2-NH₂,
∘ ou encore les polyisobutènesuccinimides de formule 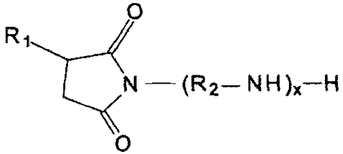 où R représente un groupement polyisobutène de masse moléculaire compris entre 140 et 5000 et de préférence entre 500 et 2000 ou de préférence entre 750 et 1250 ; ou leur équivalents structuraux bissuccinimides, succinamiques, succinamides, et où R2 représente au moins l'un des segments suivants -CH₂-CH₂-, CH₂-CH₂-CH₂, -CH-CH(CH₃)- et x un nombre entier compris entre 1 et 6.
∘ les polyéthylèneamines sont particulièrement efficaces. Elles sont par exemple décrites en détail dans la référence « Ethylene Amines » Encyclopedia of Chemical Technology, Kirk and Othmer, Vol. 5, pp.898-905, Interscience Publishers, New York (1950).
∘ les polyétheramines de formule : 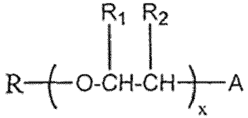 où R est un groupement alkyle ou aryle comportant de 1 to 30 atomes de carbone ; R1 et R2 sont chacun indépendamment un atome d'hydrogène, une chaîne alkyle de 1 à 6 atomes de carbone ou -O-CHR1-CHR2- ; A est une amine ou N-alkylamine avec 1 à 20 atomes de carbone dans la chaîne alkyle, une N,N-dialkylamine ayant de 1 à 20 atomes de carbone dans chaque groupe alkyle, ou une polyamine avec 2 à 12 atomes d'azote et de 2 à 40 atomes de carbone et x allant de 5 à 30.

De telles polyétheramines sont par exemple commercialisées par les sociétés BASF, HUNSTMAN ou CHEVRON.
∘ les produits de réaction entre un phénol substitué par une chaîne hydrocarbonée, un aldéhyde et une amine ou polyamine ou de l'ammoniac. Le groupement alkyle du phénol alkylé peut être constitué de 10 à 110 atomes de carbone. Ce groupement alkyle peut être obtenu par polymérisation de monomère oléfinique contenant de 1 à 10 atomes de carbone (éthylène ; propylène ; 1-butène, isobutylène et 1-décène). Les polyoléfines particulièrement utilisées sont le polyisobutène et/ou le polypropylène. Les polyoléfines ont en général une masse moléculaire moyenne en masse Mw comprise entre 140 et 5000 et de préférence entre 500 et 2000 ou de préférence entre 750 et 1250.

Les alkyl phénols peuvent être préparés par réaction d'alkylation entre un phénol et une oléfine ou une polyoléfine comme le polyisobutylène ou polypropylène.

L'aldéhyde utilisé peut contenir de 1 à 10 atomes de carbone, généralement du formaldéhyde ou du paraformaldéhyde.

L'amine utilisée peut être une amine ou une polyamine incluant les alkanol amines ayant un ou plusieurs groupements hydroxy. Les amines utilisées sont en général choisies parmi l'éthanolamine, les diéthanolamines, la méthylamine, la diméthylamine, l'éthylènediamine, la diméthylaminopropylamine, la diéthylènetriamine, la triéthylènetétramine, la tétraéthylènepentamine et/ou le 2-(2-aminoéthylamino) éthanol. Ce dispersant peut être préparé par une réaction de Mannich en faisant réagir un alkylphénol, un aldéhyde et une amine comme décrit dans le brevet US 5 697 988.
∘ les autres dispersants, tels que :
   ∘ les dispersants carboxyliques comme ceux décrits dans US 3,219,666 ;
   ∘ les dispersants aminés issus de la réaction entre des aliphatiques halogénés de haut poids moléculaire avec des amines ou des polyamines de préférence des polyalkylène polyamines, décrits par exemple dans US 3 565 804 ;
   ∘ les dispersants polymériques obtenus par polymérisation d'alkylacrylates ou alkylméthacrylates (chaînes alkyles en C8 à C30), des aminoalkylacrylates ou acrylamides et des acrylates substitués par des groupements poly-(oxyéthylène). Des exemples de dispersants polymériques sont par exemple décrits dans US 3 329 658 et US 3 702 300 ;
   ∘ les dispersants contenant au moins un groupement aminotriazole tels que décrits par exemple dans US2009/0282731 issus de la réaction d'un acide ou anhydride dicarboyxlique substitué par un hydrocarbyle et d'un composé d'amine ou sel de type (amino)guanidine ;
   ∘ les oligomères de PIBSA et/ou de DDSA et de monohydrate d'hydrazine, tels que ceux décrits dans EP 1 887 074 ;
   ∘ les oligomères de napthol éthoxylé et de PIBSA, tels que ceux décrits dans EP 1 884 556 ;
   ∘ les dérivés esters, amides ou imides quaternisés de PIBSA, tels que ceux décrits dans WO2010/132259 ;
   ∘ les mélanges de bases de Mannich, par exemple dodécylphénol/éthylènediamine/formaldéhyde, et de PIBSI, tels que ceux décrits dans WO2010/097624 et WO 2009/040582 ;
   ∘ les terpolymères quaternisés d'éthylène, d'ester(s) alcényle(s) et de monomère(s) avec au moins une insaturation éthylénique et contenant un azote tertiaire au moins partiellement quaternisé, tels que ceux décrits dans WO2011/134923.

La présente invention concerne l'utilisation de compositions d'additifs, telle que décrite à la revendication 1, pour améliorer la résistance au lacquering de carburants diesel et biodiesel de qualité supérieure, lesdites compositions comprenant au moins un anti-oxydant de type phénol encombré (alkylphénol) a/ et au moins un passivateur de métaux b/.

Les compositions d'additifs pour carburants, notamment de type gazole ou (bio)gazole, utilisées dans l'invention améliorant la résistance au lacquering comprennent :
- au moins un anti-oxydant de type phénol encombré (alkylphénol) a/ et
- au moins un passivateur de métaux b/.
tels que décrits à la revendication 1. L'amélioration de la résistance au lacquering apportée par les compositions d'additifs de la présente invention est totalement différente de l'amélioration de la résistance à l'oxydation des biodiesels telle que décrite par exemple dans EP 2 087 074, EP 2 132 285 ou EP 2 173 838. En effet, le phénomène d'oxydation décrit dans ces documents se produit sous l'action notamment de la lumière et de l'air. Or, les dépôts dus au phénomène de lacquering se produisent à l'intérieur même du moteur, au niveau de l'injecteur, c'est-à-dire dans un environnement à l'abri de la lumière. De plus, comme indiqué ci-dessus, le phénomène de lacquering induit l'apparition de dépôts qui apparaissent spécifiquement au niveau des injecteurs et qui résultent notamment de la réaction chimique d'un modificateur de frottement acide et d'un réducteur de dépôts/dispersant, formant notamment des sels.

Le document US 2010/0293844 A1 divulgue une utilisation de compositions d'additifs pour améliorer la résistance au lacquering de carburants diesel et biodiesel comprenant au moins 50 ppm m/m de réducteur(s) de dépôts/dispersant(s), lesdites compositions comprenant au moins un anti-oxydant de type phénol encombré (alkylphénol) et au moins un passivateur de métaux étant une amine substituées par des groupements triazole. Le ou les agents anti-oxydants a/ de type phénol encombré sont choisis parmi les molécules comprenant au moins un groupe phénol encombré (alkylphénols), tel que le di-t-butyl-2,6 méthyl-4 phénol (BHT), la t-butyl hydroquinone (TBHQ), le 2,6 et le 2,4 di-t-butyl phénol, le 2,4-diméthyl-6- t-butyl phénol, le pyrogallol, le tocophérol, le 4,4'- méthylène bis (2,6-di-t-butyl phénol) (N° CAS 118-82-1), seuls ou en mélange.

Les agents anti-oxydants de type phénol encombré a/ préférés comprennent une ou plusieurs des molécules suivantes comprenant au moins un groupe phénol encombré, seules ou en mélange : le di-t-butyl-2,6 méthyl-4 phénol (BHT), la t-butyl hydroquinone (TBHQ), le 2,6 ou le 2,4 di-t-butyl phénol, le 2,4-diméthyl-6- t-butyl phénol seuls ou en mélange.

Le ou les passivateurs de métaux b/ sont choisis parmi les amines substituées par des groupements triazole (benzotriazole, toluyltriazole, ...) tels que la N,N-Bis(2-éthylhexyl)-1,2,4-triazol-1-ylméthanamine (CAS 91273-04-0), la N,N'-bis- (2 éthylhexyl) -4-méthyl-1H-benzotriazole-1-méthyl-amine (CAS 80584-90-3), la N,N-bis(heptyl)-ar-methyl-1H-benzotriazole-1-methanamine, la N,N-bis(nonyl)-ar-methyl-1 H-Benzotriazole-1-methanamine, la N,N-bis(decyl)-ar-methyl-1 H-Benzotriazole-1-methanamine, la N,N-bis(undecyl)-ar-methyl-1 H-benzotriazole-1-methanamine, la N,N-bis(dodecyl)-ar-methyl-1 H-benzotriazole-1-methanamine, la N,N-bis(2-ethylhexyl)-ar-methyl-1 H-Bbenzotriazole-1-methanamine, les 1,2,4-triazoles, benzimidazoles, les 2-alkyldithiobenzimidazoles; les 2-alkyldithiobenzothiazoles; les 2-(N,N-dialkyldithiocarbamoyl)benzothiazoles; les 2,5-bis(alkyl-dithio)-1,3,4-thiadiazoles tels que le 2,5-bis(tert-octyldithio)-1,3,4-thiadiazole, le 2,5-bis(tert-nonyldithio)-1,3,4-thiadiazole, le 2,5-bis(tert-decyldithio)-1,3,4-thiadiazole, le 2,5-bis(tert-undecyldithio)-1,3,4-thiadiazole, le 2,5-bis(tert-dodecyldithio)-1,3,4-thiadiazole, le 2,5-bis(tert-tridecyldithio)-1,3,4-thiadiazole, le 2,5-bis(tert-tetradecyldithio)-1,3,4-thiadiazole, le 2,5-bis(tert-pentadecyldithio)-1,3,4-thiadiazole, le 2,5-bis(tert-hexadecyldithio)-1,3,4-thiadiazole, le 2,5-bis(tert-heptadecyldithio)-1,3,4-thiadiazole, le 2,5-bis(tert-octadecyldithio)-1,3,4-thiadiazole, le 2,5-bis(tert-nonadecyldithio)-1,3,4-thiadiazole, le 2,5-bis(tert-eicosyldithio)-1,3,4-thiadiazole ; les 2,5-bis(N,N-dialkyldithiocarbamoyl)-1,3,4-thiadiazoles; 2-alkyldithio-5-mercapto thiadiazoles; seuls ou en mélange.

Le ou les passivateurs de métaux b/ préférés sont choisis parmi la N,N-Bis(2-éthylhexyl)-1,2,4-triazol-1-ylméthanamine (CAS 91273-04-0) et/ou la N,N'-bis- (2 éthylhexyl) -4-méthyl-1H-benzotriazole-1-méthyl-amine (CAS 80584-90-3), seules, ou en mélange avec d'autres passivateurs de métaux connus et habituellement rencontrés dans les moteurs en particulier les passivateurs de cuivre, de zinc.

De préférence, les compositions d'additifs selon l'invention comprennent :
a/ au moins un anti-oxydant de type phénol encombré (alkylphénol) contenant un ou plusieurs alkylphénols choisis parmi le di-t-butyl-2,6 méthyl-4 phénol (BHT), la t-butyl hydroquinone (TBHQ), le 2,6 ou le 2,4 di-t-butyl phénol, le 2,4-diméthyl-6- t-butyl phénol, seuls ou en mélange,
b/ au moins un passivateur de métaux, de préférence comprenant la N,N-bis(2-éthylhexyl)-1,2,4-triazol-1-ylméthanamine (CAS 91273-04-0) et/ou la N,N'-bis- (2 éthylhexyl) -4-méthyl-1H-benzotriazole-1-méthyl-amine (CAS 80584-90-3), seule(s) ou en mélange avec d'autres passivateurs de métaux.

Selon un mode de réalisation de l'invention, les compositions d'additifs comprennent un ratio massique passivateur/anti-oxydant allant de 1/10 à 2, de préférence allant de 1/6 à 1, avantageusement de 1/5 à 1/2.

Selon un mode de réalisation, les compositions d'additifs utilisées dans l'invention comprennent le di-t-butyl-2,6 méthyl-4 phénol (BHT) et la N,N-bis(2-éthylhexyl)-1,2,4-triazol-1-ylméthanamine (CAS 91273-04-0).

Selon un mode de réalisation de l'invention, les compositions d'additifs utilisées comprennent la t-butyl hydroquinone (TBHQ) et la N,N-bis(2-éthylhexyl)-1,2,4-triazol-1-ylméthanamine (CAS 91273-04-0).

Selon un mode de réalisation de l'invention, les compositions d'additifs utilisées comprennent le di-t-butyl-2,6 méthyl-4 phénol (BHT) et la N,N'-bis- (2-éthylhexyl) -4-méthyl-1H-benzotriazole-1-méthyl-amine (CAS 80584-90-3).

Selon un mode de réalisation de l'invention, les compositions d'additifs comprennent la t-butyl hydroquinone (TBHQ) et la N,N'-bis- (2-éthylhexyl) -4-méthyl-1 H-benzotriazole-1-méthyl-amine (CAS 80584-90-3).

Outre les composants a/ et b/ mentionnés ci-dessus, les compositions d'additifs selon l'invention peuvent également contenir d'autres additifs, de nature chimique différente et/ou de fonctionnalité(s) différente(s).

Parmi ces autres additifs différents des anti-oxydants a/et des passivateurs b/, les compositions selon l'invention peuvent contenir, de manière non-exhaustive ;
- au moins un additif de tenue à froid,
- au moins un traceur ou marqueur,
- au moins un agent parfumant et/ou masquant d'odeur et/ou réodorant,
- au moins un agent biocide,
- au moins un agent désactivateur métallique,
- un ou plusieurs réducteurs de dépôts/dispersants.

Selon un mode de réalisation, les compositions d'additifs selon l'invention comprennent :
- au moins un agent anti-oxydant de type phénol encombré (alkylphénol),
- au moins un passivateur de métaux, et
- au moins un réducteur de dépôts/dispersant classique.

Selon un mode de réalisation de l'invention, les compositions d'additifs comprennent :
- de 1 à 50% en poids, de préférence de 5 à 30% en poids d'au moins un agent anti-oxydant de type phénol encombré a/,
- de 1 à 25% en poids, de préférence de 2 à 15% en poids d'au moins un passivateur de métaux,
- au moins un réducteur de dépôts/dispersant classique, de préférence en une quantité allant jusqu'à 80% en poids, de préférence encore allant de 30 à 70% en poids.

Des exemples de réducteurs de dépôts/dispersants classiquement utilisés dans les carburants diesel ou biodiesel ont été indiqués précédemment. On peut notamment citer :
∘ les amines substituées telle que la N-polyisobutène amine R1-NH₂, la N-polyisobutènethylènediamine R1-NH-R2-NH₂,
∘ les polyisobutènesuccinimides de formule 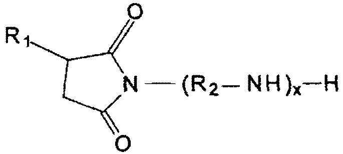 où R représente un groupement polyisobutène de masse moléculaire compris entre 140 et 5000 et de préférence entre 500 et 2000 ou de préférence entre 750 et 1250 ; ou leur équivalents structuraux bissuccinimides, succinamiques, succinamides, et où R2 représente au moins l'un des segments suivants -CH₂-CH₂-, CH₂-CH₂-CH₂, -CH-CH(CH₃)- et x un nombre entier compris entre 1 et 6.
∘ les polyéthylèneamines,
∘ les polyétheramines de formule : 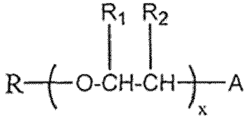 où R est un groupement alkyle ou aryle comportant de 1 to 30 atomes de carbone ; R1 et R2 sont chacun indépendamment un atome d'hydrogène, une chaîne alkyle de 1 à 6 atomes de carbone ou -O-CHR1-CHR2- ; A est une amine ou N-alkylamine avec 1 à 20 atomes de carbone dans la chaîne alkyle, une N,N-dialkylamine ayant de 1 à 20 atomes de carbone dans chaque groupe alkyle, ou une polyamine avec 2 à 12 atomes d'azote et de 2 à 40 atomes de carbone et x allant de 5 à 30,
∘ les dispersants carboxyliques comme ceux décrits dans US 3,219,666 ;
∘ les dispersants aminés issus de la réaction entre des aliphatiques halogénés de haut poids moléculaire avec des amines ou des polyamines de préférence des polyalkylène polyamines, décrits par exemple dans US 3 565 804 ;
∘ les dispersants polymériques obtenus par polymérisation d'alkylacrylates ou alkylméthacrylates (chaînes alkyles en C8 à C30), des aminoalkylacrylates ou acrylamides et des acrylates substitués par des groupements poly-(oxyéthylène). Des exemples de dispersants polymériques sont par exemple décrits dans US 3 329 658 et US 3 702 300 ;
∘ les dispersants contenant au moins un groupement aminotriazole tels que décrits par exemple dans US2009/0282731 issus de la réaction d'un acide ou anhydride dicarboyxlique substitué par un hydrocarbyle et d'un composé d'amine ou sel de type (amino)guanidine,
∘ les oligomères de PIBSA et/ou de DDSA et de monohydrate d'hydrazine, tels que ceux décrits dans EP 1 887 074 ;
∘ les oligomères de napthol éthoxylé et de PIBSA, tels que ceux décrits dans EP 1 884 556 ;
∘ les dérivés esters, amides ou imides quaternisés de PIBSA, tels que ceux décrits dans WO2010/132259 ;
∘ les mélanges de bases de Mannich, par exemple dodécylphénol/éthylènediamine/formaldéhyde, et de PIBSI, tels que ceux décrits dans WO2010/097624 et WO 2009/040582 ;
∘ les terpolymères quaternisés d'éthylène, d'ester(s) alcényle(s) et de monomère(s) avec au moins une insaturation éthylénique et contenant un azote tertiaire au moins partiellement quaternisé, tels que ceux décrits dans WO2011/134923.

Selon un mode de réalisation de l'invention, le réducteur de dépôts/dispersants est choisi parmi le PIBSI (polyisobutènesuccimide) et le EDTA/DDSA (acide éthylène diamine tétraacétique/anhydride dodécénylsuccinique).

Selon la nature et la miscibilité des constituants a/ et b/ de la composition d'additifs selon l'invention et des éventuels autres additifs avec le carburant diesel ou biodiesel, la composition d'additifs peut également contenir un ou plusieurs solvants organiques hydrocarbonés et éventuellement au moins un agent compatibilisant ou co-solvant.

De préférence, la composition d'additifs comprend en outre au moins un solvant organique hydrocarboné et/ou au moins un agent compatibilisant ou co-solvant.

Le ou les additifs de tenue à froid peuvent être choisis parmi les additifs améliorant le point d'écoulement (pour point), les additifs améliorant la Température Limite de Filtrabilité (TLF), les additifs améliorant le point de trouble (cloud point) et/ou les additifs anti-sédimentation et/ou dispersants de paraffines.

A titre d'exemples d'additifs améliorant le point d'écoulement et la filtrabilité (CFI), on peut citer les copolymères d'éthylène et d'acétate de vinyle (EVA) et/ou copolymères d'éthylène et de propionate de vinyle (EVP).

A titre d'exemples d'additifs améliorant la TLF, on peut citer les additifs polyfonctionnels d'opérabilité à froid choisis notamment dans le groupe constitué par les polymères à base d'oléfine et de nitrate d'alkényle tels que ceux décrits dans EP 573 490.

A titre d'exemples d'additifs améliorant le point de trouble, on peut citer de manière non limitative les composés choisis dans le groupe constitué par les terpolymères oléfine à chaîne longue/ester (méth)acrylique /maléimide, et les polymères d'esters d'acides fumarique /maléique. Des exemples de tels additifs sont donnés dans EP 71 513, EP 100 248, FR 2 528 051, FR 2 528 051, FR 2 528 423, EP1 12 195, EP 1 727 58, EP 271 385, EP 291367.

A titre d'exemples d'additifs anti-sédimentation et/ou dispersants de paraffines, on peut utiliser notamment les additifs d'anti-sédimentation (mais non limitativement) choisis dans le groupe constitué par les copolymères acide (méth)acrylique/(méth)acrylate d'alkyle amidifié par une polyamine, les alkénylsuccinimides de polyamine, les dérivés d'acide phtalamique et d'amine grasse à double chaîne ; des résines alkyl phénol/aldéhyde ; des exemples de tels additifs sont donnés dans EP 261 959, EP593 331, EP 674 689, EP 327 423, EP 512 889, EP 832 172 ; US 2005/0223631 ; US 5 998 530 ; WO 93/14178.

De préférence, les compositions d'additifs selon l'invention contiennent au moins un additif de tenue à froid choisi parmi les copolymères éthylène/acétate de vinyle (EVA) et/ou des terpolymères éthylène/acétate de vinyle/versatate de vinyle (VEOVA) et/ou des terpolymères éthylène/acétate de vinyle/ester acryliques (acrylate de 2-éthylhexyle) en tant qu'additif de tenue à froid.

Le ou les éventuels agents parfumants et/ou masquants d'odeur et/ou réodorants peuvent être notamment choisis parmi les esters aliphatiques ou cycloaliphatiques suivants:
▪ 3a,4,5,6,7,7a-hexahydro-4,7-methano-1 h-inden-5 (ou 6) -yl isobutyrate (CAS 67634-20-2)
▪ tricyclodécényl propionate (CAS 17511-60-3)
▪ acétate de cis 3 hexenyle (CAS 3681-71-8)
▪ éthyl linalol (CAS 10339-55-6)
▪ acétate de prényle (CAS 1191-16-8)
▪ myristate d'éthyle (CAS 124-06-1)
▪ acétate de para tertio butyl cyclo hexyl (CAS 32210-23-4)
▪ acétate de butyle (CAS 123-86-4),
▪ 4,7-méthano-1h-inden-6-ol, 3a,4,5,6,7,7a-hexahydro-, acétate (CAS 5413-60-5)
▪ caprate d'éthyle (CAS 110-38-3)

Le ou les éventuels agents parfumants et/ou masquants d'odeur et/ou réodorants peuvent être choisis parmi :
* les composés tricycliques organiques décrits dans EP 1.591.514 qui sont des composés tricycliques organiques de formule (I) ci-après 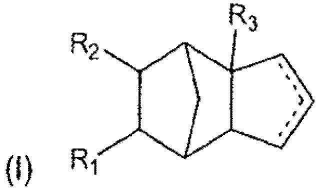 dans laquelle le cycle cyclopentane est saturé ou insaturé, et R1, R2, R3, identiques ou différents, sont choisis parmi l'hydrogène et les radicaux hydrocarbonés comprenant de 1 à 10 atomes de carbone et comportant éventuellement un ou plusieurs hétéroatomes ainsi que
* les aldéhydes aliphatiques ou aromatiques tels que la vanilline,
* les esters aliphatiques ou aromatiques, tels que l'acétate de benzyle,
* les alcools, tels que le linalol, les alcools phényléthyliques,
* les cétones, telles que le camphre cristallisé, l'éthylmaltol,
* les huiles essentielles, telles que l'huile essentielle dérivées d'agrumes seuls ou en mélanges.

De manière avantageuse, on préfère utiliser comme agent parfumant, masquant d'odeur ou réodorant, une combinaison d'au moins un composé tricyclique organique et d'au moins un aldéhyde, un ester, un hydroxyde, une cétone, une huile essentielle telle que définis ci-dessus.

Le ou les agents biocides peuvent être choisis parmi :
∘ les oxazolidines : 3,3'-méthylène bis[5-méthyloxazolidine] (CAS : 66204-44-2) ;
∘ les mélanges (CAS N° 55965849) des composés suivants : 5-chloro-2-methyl-2H-isothiazol-3-one (CAS : 26172-55-4 et EINECS 247-500-7) et 2-méthyl-2H-isothiazol-3-one (CAS N°2682-20-4 et EINECS 220-239-6) ;
∘ les mélanges d'isothiocyanates : méthylène bis(thiocyanate) (CAS : 6317-18-6) et 2-(thiocyano methylthio)benzothiazole (CAS : 21564-17-0) ;
∘ les sels d'ammonium quaternaires sous forme de chlorures obtenus à partir d'alkyl benzène en C12-C18 ou d'alkyl diméthyl benzène.

Le ou les désactivateurs de métaux ou agents chélatants peuvent être choisis parmi les amines substituées par des groupements N,N'-disalicylidène, tels que N,N'-disalicylidène 1,2-diaminopropane (MDA).

Certains des composants des compositions selon l'invention peuvent avoir plusieurs fonctionnalités, typiquement marqueur et agent parfumant : un composant peut être à la fois marqueur et agent parfumant.

Outre les composants décrits précédemment (additifs selon l'invention a/ et b/, autres additifs tels que définis précédemment, solvants, co-solvants), les compositions d'additifs pour carburants selon l'invention peuvent contenir d'autres additifs tels que ceux imposés par les réglementations (marqueurs, désémulsifiants, additifs anti-statiques ou améliorants de conductivité, additifs de lubrifiance, agents anti-usure et/ou modificateurs de frottement, additifs améliorant de combustion et notamment les additifs améliorant le cétane), additifs anti-mousse .... L'invention concerne l'utilisation d'au moins une composition d'additifs selon l'invention incorporée dans un carburant de type diesel ou biodiesel de qualité supérieure pour améliorer la résistance au lacquering, i-e encrassement sur la tête et/ou sur le corps des aiguilles du système d'injection du carburant mais aussi dans tout le système de commande de la levé d'aiguilles (clapets) du système d'injection, notamment pour les moteurs pourvus des systèmes d'injection de carburant de type Euro 4 à Euro 6.

Le procédé d'amélioration de la résistance au lacquering permet d'éviter et/ou réduire et/ou retarder :
- un ralentissement de la réponse de l'injecteur de carburant,
- le collage des pièces internes, ce qui peut entraîner une perte de contrôle du temps d'injection ainsi que de la quantité de carburant fournie par injection,
- une perte de maniabilité du véhicule,
- des variations de puissance,
- une augmentation de la consommation de carburant,
- une augmentation des polluants,
- une perturbation de la combustion, puisque la quantité de carburant injectée ne sera pas celle prévue en théorie et le profil de l'injection sera différent,
- un ralenti instable du véhicule,
- une augmentation du bruit produit par le moteur,
- une baisse de la qualité de la combustion sur le long terme,
- une baisse de la qualité de la pulvérisation.

Un autre objet de l'invention concerne des carburants diesel ou biodiesel, tels que décrits à la revendication 6, de qualité supérieure et de résistance au lacquering améliorée, additivés avec au moins 50 ppm m/m de réducteur(s) de dépôts/dispersants et au moins une composition comprenant au moins un agent anti-oxydant de type phénol encombré (alkylphénol) a/ et au moins un passivateur de métaux b/ choisi parmi les amines substituées par des groupements triazole. La concentration en additifs a/ et b/ respectivement dans le carburant final additivé est comprise entre 2 et 200 ppm m/m et avantageusement entre 10 et 50 ppm m/m, c'est-à dire ppm massiques rapportés à la masse totale du carburant additivé.

De préférence la composition de carburant liquide de type (bio)diesel selon l'invention comprend de 100 à 2.000 ppm m/m et avantageusement de 500 à 1500 ppm m/m de composition(s) d'additifs selon l'invention telle(s) que définie(s) ci-dessus.

Selon un mode de réalisation de l'invention, le carburant diesel ou biodiesel selon l'invention comprend :
- de 2 à 200 ppm m/m, de préférence de 10 à 100 ppm m/m, de préférence encore de 30 à 80 ppm m/m, avantageusement de 10 à 50 ppm m/m, d'agent anti-oxydant de type phénol encombré a/, et
- de 2 à 200 ppm m/m, de préférence de 5 à 50 ppm m/m, avantageusement de 10 à 50 ppm m/m, de passivateur de métaux b/ choisi parmi les amines substituées par des groupements triazole, et
- au moins 50 ppm m/m, de préférence de 50 à 1000 ppm m/m, avantageusement de 50 à 500 ppm m/m, idéalement de 50 à 250 ppm m/m d'au moins un réducteur de dépôts/dispersants classiques.

L'homme du métier adaptera aisément le taux d'addivation de composition(s) d'additifs selon l'invention en fonction de la concentration en additifs a/ et b/, qui peut par exemple dépendre de la viscosité des additifs a/ et b/, de celle des éventuels autres additifs ; dans le cas où la composition d'additifs selon l'invention contient solvants, co-solvants, de la solubilité des additifs dans ces solvants.

Les éventuels autres additifs sont en général incorporés en quantités allant de 50 à 1.500 ppm m/m, c'est-à dire ppm massiques rapportés à la masse totale du carburant additivé.

Par carburants diesel ou biodiesel, on entend les mélanges à base d'hydrocarbures liquides ayant des températures de distillation comprises entre 140 et 380°C, de préférence entre 180 et 360°C ; ces mélanges sont en général issus de coupes de types distillats moyens, issues de raffineries et/ou d'agrocarburants et/ou de biocarburants et/ou de biomasse et/ou de carburants de synthèse, et notamment de coupes riches en paraffines et en isoparaffines, avec une proportion de naphtènes, ou encore des molécules aromatiques telles que celles contenues dans des gazoles issus de la pyrolyse de la biomasse, de préférence répondant aux spécifications locales des carburants diesel, par exemple EN 590 dans l'Union Européenne.

Les carburants (bio)diesel additivés avec au moins une composition d'additifs améliorant le lacquering selon l'invention peuvent être préparés par dopage du mélange hydrocarboné, de la ou des compositions d'additifs selon l'invention et du ou des éventuels autres additifs, en une ou plusieurs étapes, en général à température ambiante. On ne sortirait pas du cadre de l'invention en mélangeant de manière séparée les composants de la composition d'additifs selon l'invention (additifs a/ et b/), éventuellement les autres additifs, le(s) solvant(s) et/ou co-solvant(s)), avec le carburant (bio)diesel.

Les inventeurs ont également mis au point une nouvelle méthode fiable et robuste pour évaluer la sensibilité des carburants (bio)gazole, notamment ceux de qualité supérieure, au lacquering. Cette méthode, à la différence des méthodes décrites dans les publications citées précédemment, n'est pas une méthode de laboratoire mais est basée sur de véritables essais moteurs et donc présente un intérêt technique et permet de quantifier l'efficacité des additifs ou des compositions d'additifs contre le lacquering. La méthode de mesure du lacquering mise au point par les inventeurs est détaillée ci-dessous :
Le moteur utilisé est un moteur quatre cylindres et 16 soupapes diesel à injection haute pression Common Rail d'une cylindrée de 1.500 cm³ et d'une puissance de 80 CV : la régulation de pression d'injection du carburant se faisant dans la partie haute pression de la pompe.

Le point de puissance est de 40 h à 4 000 trs/min ; la position de l'injecteur dans la chambre est descendue de 1 mm par rapport à sa position nominale, ce qui d'une part favorise le dégagement d'énergie thermique de la combustion, et d'autre part rapproche l'injecteur de la chambre de combustion.
- Le débit de carburant injecté est ajusté de manière à obtenir une température à l'échappement de 750°C en début d'essai.
- L'avance à l'injection a été augmentée de 1,5° vilebrequin par rapport au réglage nominal (on passe de + 12,5° à + 14° vilebrequin) toujours dans le but d'augmenter les contraintes thermiques subies par la buse de l'injecteur.
- Enfin, pour augmenter les contraintes subies par le carburant, la pression d'injection a été augmentée de 10 MPa par rapport à la pression nominale (c'est-à-dire passage de 140 MPa à 150 MPa) et la température est régulée à 65°C en entrée pompe haute pression.

La technologie utilisée pour les injecteurs nécessite un retour carburant élevé, ce qui favorise la dégradation du carburant puisqu'il peut être soumis à plusieurs cycles dans la pompe haute pression et la Common Rail avant d'être injecté dans la chambre de combustion.

Expression des résultats :
Pour s'assurer de la validité du résultat, différents paramètres sont contrôlés durant l'essai : puissance, couple et consommation de carburant indiquent si l'injecteur s'encrasse ou si son fonctionnement est détérioré par une formation de dépôts puisque le point de fonctionnement est le même tout au long de l'essai.

Les températures caractéristiques des différents fluides (liquide de refroidissement, carburant, huile) permettent de contrôler la validité des essais. Le carburant est régulé à 65°C en entrée pompe, le liquide de refroidissement est régulé à 90°C en sortie moteur.

Les valeurs de fumées permettent de contrôler le calage de la combustion en début d'essai (valeur cible de 3FSN) et de s'assurer qu'elle est bien répétable d'un essai à l'autre.

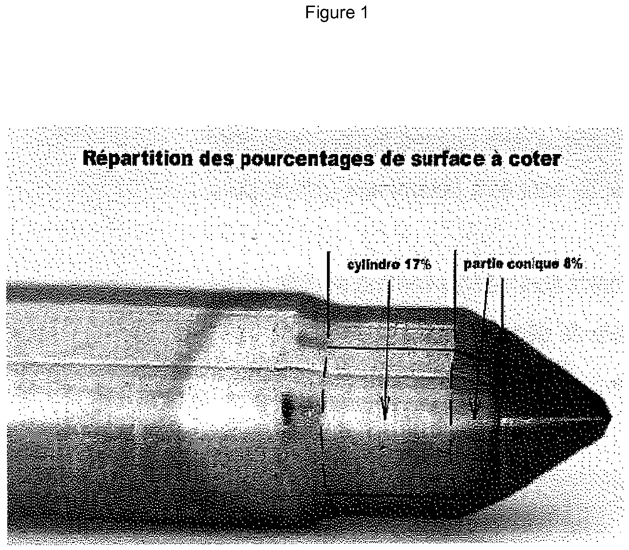

Les injecteurs sont démontés en fin d'essai pour visualiser et côter les dépôts formés le long des aiguilles. La procédure de cotation des aiguilles retenue est la suivante :
L'échelle des notes varie de -2,5 (cas d'un important dépôt) à 10 (cas d'une aiguille neuve sans aucun dépôt). La note finale est une moyenne pondérée des notes sur toutes les surfaces cotées de l'aiguille
Surface totale : partie cylindre (suivant directement la partie conique) + partie conique : 100 %
Pondération surfacique de la partie cylindre (suivant directement la partie conique): 68 %
Pondération surfacique de la partie conique : 32 %
Voir la figure 1 ci-jointe qui montre la partie cylindre et la partie conique qui sont cotées (les % indiqués correspondent au quart de la surface des aiguilles : ainsi la pondération surfacique globale est donc de 17*4 = 68 %)
Un seuil de performance produit a été déterminé par rapport à cette procédure de cotation : Résultat < 4 = Mauvais, résultat > 4 = Satisfaisant
Les exemples suivent illustrent l'invention sans la limiter.

### Exemples

On met en oeuvre la méthode d'évaluation du lacquering décrite ci-dessus pour différents compositions de carburants B0 ou B7 répondant à la norme EN 590 additivés ou non avec un ou plusieurs additifs pétroliers
Le détail de chaque composition de carburant testée est indiqué dans le tableau 1 ci-dessous ainsi que la note globale en résistance au lacquering. Dans le tableau 2 sont détaillées les natures chimiques des additifs du tableau 1.

Les carburants B0 (sans EMHV) et B7#1 et B7#2 sont des carburants diesel standard, répondant à la norme EN 590 et ont une teneur en soufre inférieure ou égale à 10 ppm.

Sauf indication contraire, les quantités indiquées des additifs sont exprimées en ppm m/m : masse d'additif en ppm massique par masse totale de carburant additivé.

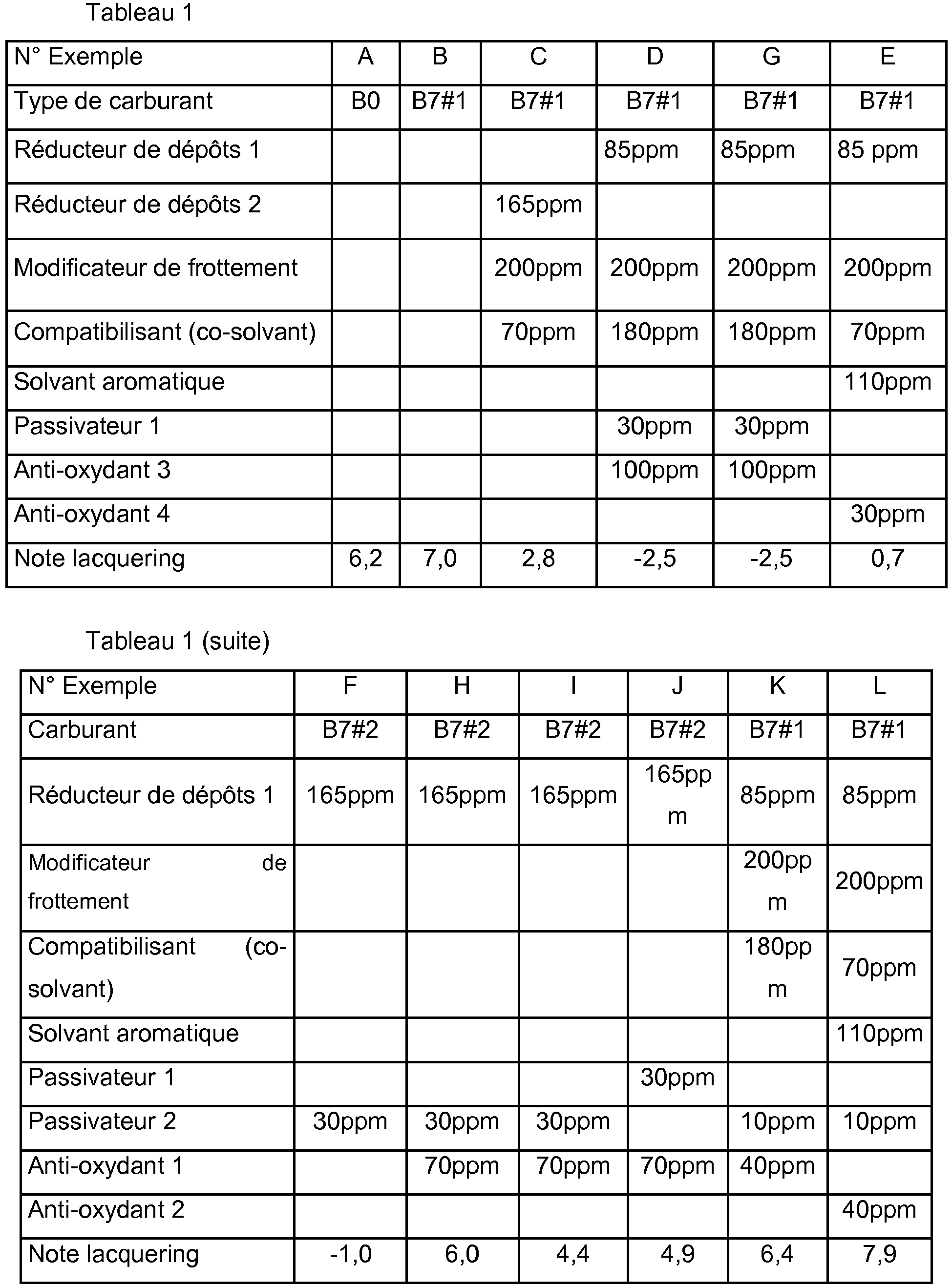

**Tableau 2**

| | |
|---|---|
| Réducteur de dépôts 1 | PIBSI (produit de réaction d'un PIBSA de masse moléculaire moyenne 1000 et de tétraéthylène pentamine, rapport molaire 1 :1) |
| Réducteur de dépôts 2 | DETA/DDSA |
| Modificateur de frottement | acide linoléique (90 % min) |
| Compatibilisant (co-solvant) | éthyl-2 hexanol |
| Solvant aromatique | Solvarex 10 |
| Passivateur 1 | Triazole CAS: 91273-04-0 |
| Passivateur 2 | Benzotriazole CAS :80584-90-3 |
| Anti-oxydant 1 | Ter butyl hydroquinone (TBHQ) |
| Anti-oxydant 2 | Butyl hydroxyl toluène(BHT) |
| Anti-oxydant 3 | Mélange de 3,6,9-triazaundécane-1,11-diamine + N,N'-disalicylidène-1,2-diaminopropane (DMA) commercialisé par BASF |
| Anti-oxydant 4 | Mélange d'alkylamines et d'amines encombrées |

Les carburants H à L additivés avec une composition d'additifs selon l'invention présentent une résistance au lacquering bonne, voire excellente, à la différence des carburants comparatifs additivés C à G.

## Revendications

1. Utilisation de compositions d'additifs pour améliorer la résistance au lacquering de carburants diesel et biodiesel comprenant au moins 50 ppm m/m de réducteur(s) de dépôts/dispersant(s), lesdites compositions comprenant au moins un anti-oxydant de type phénol encombré (alkylphénol) a/ choisi parmi le di-t-butyl-2,6 méthyl-4 phénol (BHT), la t-butyl hydroquinone (TBHQ), le 2,6 et le 2,4 di-t-butyl phénol, le 2,4-diméthyl-6- t-butyl phénol, le pyrogallol, le tocophérol, le 4,4'-méthylène bis (2,6-di-t-butyl phénol) (N° CAS 118-82-1), seuls ou en mélange et au moins un passivateur de métaux b/ choisi parmi les amines substituées par des groupements triazole, les benzimidazoles, les 2-alkyldithiobenzimidazoles; les 2-alkyldithiobenzothiazoles; les 2-(N,N-dialkyldithiocarbamoyl)benzothiazoles ; les 2,5-bis(N,N-dialkyldithiocarbamoyl)-1,3,4-thiadiazoles, seuls ou en mélange, lesdites amines substitutées par des groupements triazole étant choisies parmi la N,N-Bis(2-éthylhexyl)-1,2,4-triazol-1-ylméthanamine (CAS 91273-04-0), la N,N-bis- (2 éthylhexyl) -4-méthyl-1H-benzotriazole-1-méthyl-amine (CAS 80584-90-3), la N,N-bis(heptyl)-ar-methyl-1H-benzotriazole-1-methanamine, la N,N-bis(nonyl)-ar-methyl-1 H-Benzotriazole-1-methanamine, la N,N-bis(decyl)-ar-methyl-1 H-Benzotriazole-1-methanamine, la N,N-bis(undecyl)-ar-methyl-1 H-benzotriazole-1-methanamine, la N,N-bis(dodecyl)-ar-methyl-1 H-benzotriazole-1-methanamine, la N,N-bis(2-ethylhexyl)-ar-methyl-1 H-benzotriazole-1-methanamine.

2. Utilisation selon la revendication 1, **caractérisée en ce que** le ou les anti-oxydants de type phénol encombré (alkylphénol) a/ est choisi parmi le di-t-butyl-2,6 méthyl-4 phénol (BHT), la t-butyl hydroquinone (TBHQ), le 2,6 et le 2,4 di-t-butyl phénol, le 2,4-diméthyl-6- t-butyl phénol, seuls ou en mélange.

3. Utilisation selon la revendication 1, **caractérisée en ce que** le ou les passivateurs de métaux sont choisis parmi la N,N-Bis(2-éthylhexyl)-1,2,4-triazol-1-ylméthanamine (CAS 91273-04-0), la N,N-bis- (2 éthylhexyl) -4-méthyl-1H-benzotriazole-1-méthyl-amine (CAS 80584-90-3), la N,N-bis(heptyl)-ar-methyl-1 H-benzotriazole-1-methanamine, la N,N-bis(nonyl)-ar-methyl-1 H-Benzotriazole-1-methanamine, la N,N-bis(decyl)-ar-methyl-1H-Benzotriazole-1-methanamine, la N,N-bis(undecyl)-ar-methyl-1 H-benzotriazole-1-methanamine, la N,N-bis(dodecyl)-ar-methyl-1 H-benzotriazole-1-methanamine, la N,N-bis(2-ethylhexyl)-ar-methyl-1 H-benzotriazole-1-methanamine, seuls ou en mélange.

4. Utilisation selon l'une des revendications 1 à 3, **caractérisée en ce que** les compositions d'additifs contiennent en outre un ou plusieurs autres additifs, choisis parmi
• au moins un additif de tenue à froid,
• au moins un traceur ou marqueur,
• au moins un agent parfumant et/ou masquant d'odeur et/ou réodorant,
• au moins un agent biocide,
• au moins un agent désactivateur métallique,
• un ou plusieurs réducteurs de dépôts/dispersants.

5. Utilisation selon l'une des revendications 1 à 4, **caractérisée en ce que** les compositions d'additifs contiennent en outre un solvant et éventuellement un co-solvant.

6. Carburants diesel ou biodiesel de résistance au lacquering améliorée, additivés avec au moins 50 ppm m/m de réducteur(s) de dépôts/dispersants et au moins une composition comprenant au moins un agent anti-oxydant de type phénol encombré (alkylphénol) a/ choisi parmi le di-t-butyl-2,6 méthyl-4 phénol (BHT), la t-butyl hydroquinone (TBHQ), le 2,6 et le 2,4 di-t-butyl phénol, le 2,4-diméthyl-6- t-butyl phénol, le pyrogallol, le tocophérol, le 4,4'-méthylène bis (2,6-di-t-butyl phénol) (N° CAS 118-82-1), seuls ou en mélange et au moins un passivateur de métaux b/ choisi parmi les amines substituées par des groupements triazole, les benzimidazoles, les 2-alkyldithiobenzimidazoles; les 2-alkyldithiobenzothiazoles; les 2-(N,N-dialkyldithiocarbamoyl)benzothiazoles, les 2,5-bis(N,N-dialkyldithiocarbamoyl)-1,3,4-thiadiazoles, seuls ou en mélange, lesdits carburants présentant une concentration en additifs a/ et b/ respectivement comprise entre 2 et 200 ppm m/m, lesdites amines substituées par des groupements triazole étant choisies parmi la N,N-Bis(2-éthylhexyl)-1,2,4-triazol-1-ylméthanamine (CAS 91273-04-0), la N,N-bis- (2 éthylhexyl) -4-méthyl-1H-benzotriazole-1-méthylamine (CAS 80584-90-3), la N,N-bis(heptyl)-ar-methyl-1H-benzotriazole-1-methanamine, la N,N-bis(nonyl)-ar-methyl-1H-Benzotriazole-1-methanamine, la N,N-bis(decyl)-ar-methyl-1 H-Benzotriazole-1-methanamine, la N,N-bis(undecyl)-ar-methyl-1 H-benzotriazole-1-methanamine, la N,N-bis(dodecyl)-ar-methyl-1 H-benzotriazole-1-methanamine, la N,N-bis(2-ethylhexyl)-ar-methyl-1 H-benzotriazole-1-methanamine.

7. Carburants diesel ou biodiesel selon la revendication 6 **caractérisés en ce que** leur concentration en additifs a/ et b/ respectivement est comprise entre 10 et 50 ppm m/m.

8. Carburants diesel ou biodiesel selon la revendication 6 ou 7, dans lesquels le ou les anti-oxydants de type phénol encombré (alkylphénol) a/ est choisi parmi le di-t-butyl-2,6 méthyl-4 phénol (BHT), la t-butyl hydroquinone (TBHQ), le 2,6 et le 2,4 di-t-butyl phénol, le 2,4-diméthyl-6- t-butyl phénol, seuls ou en mélange.

9. Carburants diesel ou biodiesel selon l'une des revendications 6 à 8, dans lesquels le ou les passivateurs de métaux sont choisis parmi la N,N-Bis(2-éthylhexyl)-1,2,4-triazol-1-ylméthanamine (CAS 91273-04-0), la N,N-bis- (2 éthylhexyl) -4-méthyl-1H-benzotriazole-1-méthyl-amine (CAS 80584-90-3), la N,N-bis(heptyl)-ar-methyl-1 H-benzotriazole-1-methanamine, la N,N-bis(nonyl)-ar-methyl-1 H-Benzotriazole-1-methanamine, la N,N-bis(decyl)-ar-methyl-1 H-Benzotriazole-1-methanamine, la N,N-bis(undecyl)-ar-methyl-1 H-benzotriazole-1-methanamine, la N,N-bis(dodecyl)-ar-methyl-1 H-benzotriazole-1-methanamine, la N,N-bis(2-ethylhexyl)-ar-methyl-1 H-benzotriazole-1-methanamine, , seuls ou en mélange.

10. Carburants diesel ou biodiesel selon l'une des revendications 6 à 9, comprenant en outre un ou plusieurs autres additifs, choisis parmi
• au moins un additif de tenue à froid,
• au moins un traceur ou marqueur,
• au moins un agent parfumant et/ou masquant d'odeur et/ou réodorant,
• au moins un agent biocide,
• au moins un agent désactivateur métallique.

11. Carburants diesel ou biodiesel selon l'une des revendications 6 à 10, comprenant en outre un solvant et éventuellement un co-solvant.

## Patentansprüche

1. Verwendung von Zusatzmittelzusammensetzungen zur Verbesserung der Lackierungsbeständigkeit von Diesel- und Biodieseltreibstoffen, umfassend mindestens 50 ppm m/m Ablagerungs-/Dispergierreduktionsmittel, wobei die Zusammensetzungen
a/ mindestens ein Antioxidans vom gehinderten Phenoltyp (Alkylphenol) umfassen, ausgewählt aus Di-t-butyl-2,6-methyl-4-phenol (BHT), t-Butylhydrochinon (TBHQ), 2,6- und 2,4-Di-t-butylphenol, 2,4-Dimethyl-6-t-butylphenol, Pyrogallol, Tocopherol, 4,4'-Methylen-bis-(2,6-di-t-butylphenol) (N° CAS 118-82-1), allein oder in Mischung, und
b/ mindestens einen Metallpassivator umfassen, ausgewählt aus durch Triazolgruppen substituierten Aminen, Benzimidazolen, 2-Alkyldithiobenzimidazolen, 2-Alkyldithio-benzothiazolen, 2-(N,N-Dialkyldithiocarbamoyl)benzothiazolen, 2,5-Bis(N,N-dialkyldithiocarbamoyl)-1,3,4-thiadiazolen, allein oder in Mischung, wobei die durch Triazolgruppen substituierten Amine ausgewählt sind aus N,N-Bis(2-ethylhexyl)-1,2,4-triazol-1-gylmethanamin (CAS 91273-04-0), N,N-Bis-(2-ethylhexyl)-4-methyl-1H-benzotriazol-1-methylamin (CAS 80584-90-3), N,N-Bis(heptyl)-ar-methyl-1H-benzotriazol-1-methanamin, N,N-Bis(nonyl)-ar-methyl-1H-benzotriazol-1-methanamin, N,N-Bis(decyl)-ar-methyl-1H-benzotriazol-1-methanamin, N,N-Bis(undecyl)-ar-methyl-1H-benzotriazol-1-methanamin, N,N-Bis(dodecyl)-ar-methyl-1H-benzotriazol-1-methanamin, N,N-Bis(2-ethylhexyl)-ar-methyl-1H-benzotriazol-1-methanamin.

2. Verwendung nach Anspruch 1, **dadurch gekennzeichnet, dass** das Antioxidans oder die Antioxidantien vom gehinderten Phenoltyp (Alkylphenol) a/ aus Di-t-butyl-2,6-methyl-4-phenol (BHT), t-Butylhydrochinon (TBHQ), 2,6- und 2,4-Dit-butylphenol, 2,4-Dimethyl-6-t-butylphenol, allein oder in Mischung ausgewählt ist oder sind.

3. Verwendung nach Anspruch 1, **dadurch gekennzeichnet, dass** der Metallpassivator oder die Metallpassivatoren aus N,N-Bis(2-ethylhexyl)-1,2,4-triazol-1-ylmethanamin (CAS 91273-04-0), N,N-Bis-(2-ethyl-hexyl)-4-methyl-1H-benzotriazol-1-methylamin (CAS 80584-90-3), N,N-Bis(heptyl)-ar-methyl-1H-benzotriazol-1-methanamin, N,N-Bis(nonyl)-ar-methyl-1H-benzotriazol-1-methanamin, N,N-Bis(decyl)-ar-methyl-1H-benzotriazol-1-methanamin, N,N-Bis-(undecyl)-ar-methyl-1H-benzotriazol-1-methanamin, N,N-Bis(dodecyl)-ar-methyl-1H-benzotriazol-1-methanamin, N,N-Bis(2-ethylhexyl)-ar-methyl-1H-benzotriazol-1-methanamin, allein oder in Mischung ausgewählt ist oder sind.

4. Verwendung nach einem der Ansprüche 1 bis 3, **dadurch gekennzeichnet, dass** die Zusatzmittelzusammensetzungen außerdem ein anderes oder mehrere andere Zusatzmittel enthalten, ausgewählt aus
- mindestens einem Kältebeständigkeitszusatzmittel,
- mindestens einem Tracer oder Marker,
- mindestens einem Duftmittel und/oder Geruchsmaskierungsmittel und/oder Desodorans,
- mindestens einem Biozid,
- mindestens einem Metalldeaktivierungsmittel,
- einem oder mehreren Ablagerungs-/Dispergierreduktionsmittel(n).

5. Verwendung nach einem der Ansprüche 1 bis 4, **dadurch gekennzeichnet, dass** die Zusatzmittelzusammensetzungen außerdem ein Lösungsmittel und gegebenenfalls ein Hilfslösungsmittel enthalten.

6. Diesel- oder Biodieseltreibstoffe mit verbesserter Lackierungsbeständigkeit, additiviert mit mindestens 50 ppm m/m Ablagerungs-/Dispergierreduktionsmittel(n) und mindestens einer Zusammensetzung, umfassend:
a/ mindestens ein Antioxidans vom gehinderten Phenoltyp (Alkylphenol), ausgewählt aus Di-t-butyl-2,6-methyl-4-phenol (BHT), t-Butylhydrochinon (TBHQ), 2,6- und 2,4-Di-t-butylphenol, 2,4-Dimethyl-6-t-butylphenol, Pyrogallol, Tocopherol, 4,4'-Methylen-bis-(2,6-di-t-butylphenol) (N° CAS 118-82-1), allein oder in Mischung, und
b/ mindestens einen Metallpassivator, ausgewählt aus durch Triazolgruppen substituierten Aminen, Benzimidazolen, 2-Alkyldithio-benzimidazolen, 2-Alkyldithio-benzothiazolen, 2-(N,N-Dialkyldithiocarbamoyl)benzothiazolen, 2,5-Bis(N,N-dialkyldithiocarbamoyl)-1,3,4-thiadiazolen, allein oder in Mischung,
wobei diese Treibstoffe eine Konzentration an Zusatzmitteln a/ und b/ jeweils zwischen 2 und 200 ppm m/m aufweisen, wobei die durch Triazolgruppen substituierten Amine ausgewählt sind aus N,N-Bis(2-ethylhexyl)-1,2,4-triazol-1-ylmethanamin (CAS 91273-04-0), N,N-Bis-(2-ethylhexyl)-4-methyl-1H-benzotriazol-1-methylamin (CAS 80584-90-3), N,N-Bis(heptyl)-ar-methyl-1H-benzotriazol-1-methanamin, N,N-Bis(nonyl)-ar-methyl-1H-benzotriazol-1-methanamin, N,N-Bis(decyl)-ar-methyl-1H-benzotriazol-1-methanamin, N,N-Bis(undecyl)-ar-methyl-1H-benzotriazol-1-methanamin, N,N-Bis(dodecyl)-ar-ethyl- H-benzotriazol-1-methanamin, N,N-Bis(2-ethylhexyl)-ar-methyl-1H-benzotriazol-1-methanamin.

7. Diesel- oder Biodieseltreibstoffe nach Anspruch 6, **dadurch gekennzeichnet, dass** ihre Konzentration an Zusatzmitteln a/ und b/ jeweils zwischen 10 und 50 ppm m/m liegt.

8. Diesel- oder Biodieseltreibstoffe nach Anspruch 6 oder 7, wobei das Antioxidans oder die Antioxidantien vom gehinderten Phenoltyp (Alkylphenol) a/ aus Di-t-butyl-2,6-methyl-4-phenol (BHT), t-Butylhydrochinon (TBHQ), 2,6- und 2,4-Dit-butylphenol, 2,4-Dimethyl-6-t-butylphenol, allein oder in Mischung ausgewählt ist oder sind.

9. Diesel- oder Biodieseltreibstoffe nach einem der Ansprüche 6 bis 8, wobei der Metallpassivator oder die Metallpassivatoren aus N,N-Bis(2-ethylhexyl)-1,2,4-triazol-1-ylmethanamin (CAS 91273-04-0), N,N-Bis-(2-ethylhexyl)-4-methyl-1H-benzotriazol-1-methylamin (CAS 80584-90-3), N,N-Bis(heptyl)-ar-methyl-1H-benzotriazol-1-methanamin, N,N-Bis(nonyl)-ar-methyl-1H-benzotriazol-1-methanamin, N,N-Bis(decyl)-ar-methyl-1H-benzotriazol-1-methan-amin, N,N-Bis(undecyl)-ar-methyl-1H-benzotriazol-1-methanamin, N,N-Bis(dodecyl)-ar-ethyl-1H-benzotriazol-1-methanamin, N,N-Bis(2-ethylhexyl)-ar-methyl-1H-benzotriazol-1-methanamin, allein oder in Mischung ausgewählt ist oder sind.

10. Diesel- oder Biodieseltreibstoffe nach einem der Ansprüche 6 bis 9, umfassend außerdem ein oder mehrere andere Zusatzmittel, ausgewählt aus
- mindestens einem Kältebeständigkeitszusatzmittel
- mindestens einem Tracer oder Marker,
- mindestens einem Duftmittel und/oder Geruchsmaskierungsmittel und/oder Desodorans,
- mindestens einem Biozid,
- Metalldeaktivierungsmittel.

11. Diesel- oder Biodieseltreibstoffe nach einem der Ansprüche 6 bis 10, umfassend außerdem ein Lösungsmittel und gegebenenfalls ein Hilfslösungsmittel.

## Claims

1. Use of additive compositions for improving the lacquering resistance of diesel and biodiesel fuels comprising at least 50 ppm w/w of deposit reducer(s)/dispersant(s), said compositions comprising at least one antioxidant of the hindered phenol type (alkylphenol) a/ selected from di-t-butyl-2,6-methyl-4-phenol (BHT), t-butyl hydroquinone (TBHQ), 2,6- and 2,4-di-t-butyl phenol, 2,4-dimethyl-6-t-butyl phenol, pyrogallol, tocopherol, 4,4'- methylene bis(2,6-di-t-butyl phenol) (CAS No. 118-82-1), alone or in a mixture and at least one metal passivator b/ selected from amines substituted with triazole groups, benzimidazoles, 2-alkyldithiobenzimidazoles; 2-alkyldithiobenzothiazoles; 2-(N,N-dialkyldithiocarbamoyl)benzothiazoles; 2,5-bis(N,N-dialkyldithiocarbamoyl)-1,3,4-thiadiazoles, alone or in a mixture, said amines substituted with triazole groups being selected from N,N-bis(2-ethylhexyl)-1,2,4-triazol-1-ylmethanamine (CAS 91273-04-0), N,N'-bis(2 ethylhexyl)-4-methyl-1H-benzotriazol-1-methyl-amine (CAS 80584-90-3), N,N-bis(heptyl)-ar-methyl-1 H-benzotriazole-1-methanamine, N,N-bis(nonyl)-ar-methyl-1H-benzotriazole-1-methanamine, N,N-bis(decyl)-ar-methyl-1 H-benzotriazole-1-methanamine, N,N-bis(undecyl)-ar-methyl-1 H-benzotriazole-1-methanamine, N,N-bis(dodecyl)-ar-methyl-1 H-benzotriazole-1-methanamine, N,N-bis(2-ethylhexyl)-ar-methyl-1H-benzotriazole-1-methanamine.

2. Use according to claim 1, **characterized in that** the antioxidant or antioxidants of the hindered phenol (alkylphenol) type a/ are selected from di-t-butyl-2,6-methyl-4-phenol (BHT), t-butyl hydroquinone (TBHQ), 2,6- and 2,4-di-t-butyl phenol, 2,4-dimethyl-6-t-butyl phenol, alone or in a mixture.

3. Use according to claim 1, **characterized in that** the metal passivator or passivators are selected from N,N-bis(2-ethylhexyl)-1,2,4-triazol-1-ylmethanamine (CAS 91273-04-0), N,N'-bis(2 ethylhexyl)-4-methyl-1H-benzotriazol-1-methyl-amine (CAS 80584-90-3), N,N-bis(heptyl)-ar-methyl-1H-benzotriazole-1-methanamine, N,N-bis(nonyl)-ar-methyl-1 H-benzotriazole-1-methanamine, N,N-bis(decyl)-ar-methyl-1H-benzotriazole-1-methanamine, N,N-bis(undecyl)-ar-methyl-1H-benzotriazole-1-methanamine, N,N-bis(dodecyl)-ar-methyl-1 H-benzotriazole-1-methanamine, N,N-bis(2-ethylhexyl)-ar-methyl-1 H-benzotriazole-1-methanamine, alone or in a mixture.

4. Use according to one of claims 1 to 3, **characterized in that** the additive compositions additionally contain one or more other additives, selected from
• at least one cold resistance additive,
• at least one tracer or marker,
• at least one perfuming and/or odour-masking and/or reodorizing agent,
• at least one biocide,
• at least one metal deactivator,
• one or more deposit reducers/dispersants.

5. Use according to one of claims 1 to 4, **characterized in that** the additive compositions additionally contain a solvent and optionally a co-solvent.

6. Diesel or biodiesel fuels with improved lacquering resistance, comprising as an additive at least 50 ppm w/w of deposit reducer(s)/dispersants and at least one composition comprising at least one antioxidant of the hindered phenol type (alkylphenol) a/ selected from di-t-butyl-2,6-methyl-4-phenol (BHT), t-butyl hydroquinone (TBHQ), 2,6- and 2,4-di-t-butyl phenol, 2,4-dimethyl-6-t-butyl phenol, pyrogallol, tocopherol, 4,4'- methylene bis(2,6-di-t-butyl phenol) (CAS No. 118-82-1), alone or in a mixture and at least one metal passivator b/ selected from amines substituted with triazole groups, benzimidazoles, 2-alkyldithiobenzimidazoles; 2-alkyldithiobenzothiazoles; 2-(N,N-dialkyldithiocarbamoyl)benzothiazoles; 2,5-bis(N,N-dialkyldithiocarbamoyl)-1,3,4-thiadiazoles, alone or in a mixture, said fuels having a concentration of additives a/ and b/ respectively comprised between 2 and 200 ppm w/w, said amines substituted with triazole groups being selected from N,N-bis(2-ethylhexyl)-1,2,4-triazol-1-ylmethanamine (CAS 91273-04-0), N,N'-bis(2 ethylhexyl)-4-methyl-1H-benzotriazol-1-methyl-amine (CAS 80584-90-3), N,N-bis(heptyl)-ar-methyl-1H-benzotriazole-1-methanamine, N,N-bis(nonyl)-ar-methyl-1 H-benzotriazole-1-methanamine, N,N-bis(decyl)-ar-methyl-1H-benzotriazole-1-methanamine, N,N-bis(undecyl)-ar-methyl-1H-benzotriazole-1-methanamine, N,N-bis(dodecyl)-ar-methyl-1 H-benzotriazole-1-methanamine, N,N-bis(2-ethylhexyl)-ar-methyl-1 H-benzotriazole-1-methanamine.

7. Diesel or biodiesel fuels according to claim 6, **characterized in that** their concentration of additives a/ and b/ respectively is between 10 and 50 ppm w/w.

8. Diesel or biodiesel fuels according to claim 6 or 7, in which the antioxidant or antioxidants of the hindered phenol (alkylphenol) type a/ are selected from di-t-butyl-2,6-methyl-4-phenol (BHT), t-butyl hydroquinone (TBHQ), 2,6- and 2,4-di-t-butyl phenol, 2,4-dimethyl-6-t-butyl phenol, alone or in a mixture.

9. Diesel or biodiesel fuels according to one of claims 6 to 8, in which the metal passivator or passivators are selected from N,N-bis(2-ethylhexyl)-1,2,4-triazol-1-ylmethanamine (CAS 91273-04-0), N,N'-bis(2 ethylhexyl)-4-methyl-1H-benzotriazol-1-methyl-amine (CAS 80584-90-3), N,N-bis(heptyl)-ar-methyl-1H-benzotriazole-1-methanamine, N,N-bis(nonyl)-ar-methyl-1 H-benzotriazole-1-methanamine, N,N-bis(decyl)-ar-methyl-1H-benzotriazole-1-methanamine, N,N-bis(undecyl)-ar-methyl-1H-benzotriazole-1-methanamine, N,N-bis(dodecyl)-ar-methyl-1 H-benzotriazole-1-methanamine, N,N-bis(2-ethylhexyl)-ar-methyl-1 H-benzotriazole-1-methanamine, alone or in a mixture.

10. Diesel or biodiesel fuels according to one of claims 6 to 9, further comprising one or more other additives, selected from
• at least one cold resistance additive,
• at least one tracer or marker,
• at least one perfuming and/or odour-masking and/or reodorizing agent,
• at least one biocide,
• at least one metal deactivator.

11. Diesel or biodiesel fuels according to one of claims 6 to 10, further comprising a solvent and optionally a co-solvent.
